(19) Europäisches Patentamt

European Patent Office

Office européen des brevets

(11) **EP 1 072 653 B1**

(12) **EUROPÄISCHE PATENTSCHRIFT**

(45) Veröffentlichungstag und Bekanntmachung des Hinweises auf die Patenterteilung:
**02.03.2005 Patentblatt 2005/09**

(51) Int Cl.7: **C09D 11/00**

(21) Anmeldenummer: **00110328.2**

(22) Anmeldetag: **13.05.2000**

(54) **Wasserhaltige Tinte und ihre Verwendung**

Aqueous ink and its use

Encre aqueuse et son utilisation

(84) Benannte Vertragsstaaten:
**AT CH DE FR GB IT LI**

(30) Priorität: **22.07.1999 DE 19933889**

(43) Veröffentlichungstag der Anmeldung:
**31.01.2001 Patentblatt 2001/05**

(73) Patentinhaber: **Francotyp-Postalia AG & Co. KG**
**16547 Birkenwerder (DE)**

(72) Erfinder:
• **Gerhardt, Thomas**
**12249 Berlin (DE)**
• **Pekruhn, Wolfgang, Dr.**
**14197 Berlin (DE)**
• **Roussos, Georges, Dr.**
**10625 Berlin (DE)**

(74) Vertreter: **Eisenführ, Speiser & Partner**
**Patentanwälte Rechtsanwälte**
**Spreepalais am Dom**
**Anna-Louisa-Karsch-Strasse 2**
**10178 Berlin (DE)**

(56) Entgegenhaltungen:
**EP-A- 0 508 443     EP-A- 0 555 868**
**EP-A- 0 556 741     WO-A-98/14524**
**US-A- 5 069 718     US-A- 6 045 606**

• **DATABASE WPI Section Ch, Week 198551 Derwent Publications Ltd., London, GB; Class A97, AN 1985-321684 XP002246183 & JP 60 226575 A (SUMITOMO CHEM IND KK), 11. November 1985 (1985-11-11)**

## Beschreibung

Die Erfindung betrifft eine wasserhaltige Tinte und deren Verwendung.

Wasserhaltige Tinten werden im Tintenstrahldruck oder Farbstrahldruck eingesetzt, bei dem Tröpfchen einer Tinte oder Farbe auf das zu bedruckende Papier aufgebracht werden. Dazu kann entweder eine flüssige Tinte, bei der der Farbstoff oder die Farbstoffe in einem Lösungsmittel gelöst sind, oder bei Raumtemperatur feste Farbe verwendet werden, die aufgeschmolzen wird. Die flüssige Farbe wird zur Erzeugung des Druckbildes in Träpfchenform durch elektrostatische oder magnetische Felder oder piezoelektrische Kräfte dosiert und gelenkt. So werden z.B. bei der Piezo-Technik die Tröpfchen durch piezoelektrische Kräfte erzeugt. Bei der Bubble-Jettechnik werden die Tröpfchen durch den beim Verdampfen des Lösungsmittels entstehenden Druck auf das Papier gelenkt.

Die in solchen Systemen eingesetzten Tinten müssen sofort in das zu bedruckende Material penetrieren (was auch als wegschlagen bezeichnet wird), um nicht verschmieren zu können. Dies wird erreicht durch die Auswahl der Lösemittel.

Normalerweise enthalten Tinten ein Lösemittelgemisch aus Lösemitteln mit verschiedenen Eigenschaften zur Erzielung erwünschter Wirkungen. Diese Lösemittel müssen kompatibel miteinander sein, d.h. sie sollten im Grundlösemittel löslich oder emulgierbar sein, damit keine Phasentrennung auftritt. Wenn aus ökologischen und ökonomischen Gründen Wasser das Lösemittel der Wahl ist, müssen die verwendeten anderen Lösemittel wasserlöslich oder emulgierbar sein. Damit die Tinte schnell von dem zu bedruckenden Material aufgenommen wird, enthält sie ein das Eindringen beschleunigendes Penetrationsmittel. Trägt man die Zeit, die eine bestimmte Menge an Lösemittel, z.B. Wasser, benötigt, um in ein Substrat einzudringen, in einem Diagramm abhängig von der Menge an Penetrationsmittel auf, so erhält man eine Kurve mit einem Minimum für die Penetrationszeit, das als $t_{min}$ bezeichnet wird. Um diese minimale Penetrationszeit zu erreichen, ist eine Mindestmenge eines Penetrationsmittels notwendig, die als Grenzkonzentration bezeichnet wird. Je kleiner $t_{min}$ ist und je kleiner die Grenzkonzentration ist, desto vorteilhafter ist das in betracht gezogene Penetrationsmittel.

Die minimale Penetrationszeit wird beeinflußt von anderen in der Zusammensetzung vorhandenen Bestandteilen, insbesondere von den sonstigen vorhandenen Lösemitteln. Beispielsweise enthalten Tinten üblicherweise im Lösemittelgemisch einen oder mehrere hochsiedende Bestandteile, welche die Eintrocknung an den Düsen und das Verkrusten der Düsen verhindern sollen. Dieses hochsiedende Lösemittel, das wie oben erläutert mit dem Grundlösemittel kompatibel und daher für wasserhaltige Tinten wasserlöslich oder emulgierbar sein muß, verändert das Penetrationsverhalten der Tinte, d.h. die Grenzkonzentration wird kleiner, aber die Penetrationszeiten werden länger, und zwar um so mehr, je polarer und damit wasserlöslicher das hochsiedende Lösemittel ist. Mit steigender Polarität sinkt aber die Penetrationsfähigkeit der Tinte, da diese unter anderem von der Benetzungsfähigkeit für das zu bedruckende Material abhängt und unpolare Lösemittel, z.B. Benzin, eine Papieroberfläche besser benetzen können, als polare, z. B. Wasser. Es muß daher ein hochsiedendes Lösemittel gefunden werden, das einerseits polar genug ist, damit es wasserlöslich ist, und andererseits die Penetration nicht zu stark behindert.

Bei den bekannten wasserhaltigen Tinten wird oft ein Lösemittelgemisch aus einem Glycol als Hochsieder und einem Glycolether als Penetrationsförderer verwendet. Diese bekannten Tintenformufierungen haben jedoch den Nachteil, daß sie bei vielen Papiersorten, z.B. bei Recyclingpapieren und schwach geleimten Papieren, ein starkes Verlaufen der Tinte in der Breite und ein Ausfransen entlang der Papierfasern (auch als Spriten oder Feathering bezeichnet) bewirken, was das Druckbild negativ beeinflusst.

Ein weiterer Nachteil dieser bekannten Formulierungen besteht darin, daß sie kontrastarme Zeichen liefern, da der größte Teil des Farbstoffs durch das Lösemittel in das Papier transportiert wird und deswegen nur ein sehr geringer Teil des Farbstoffs sichtbar an der Papieroberfläche bleibt. Diese bekannten Tinten sind daher weniger geeignet zum Drucken von Zeichen und Barcodes, die maschinenlesbar sein sollen.

Ein Einsatzgebiet, wo es auf die Maschinenlesbarkeit und wegen des hohen Durchsatzes auf kurze Wegschlagzeiten ankommt, ist das Gebiet der Frankiermaschinen. Frankiermaschinensysteme wurden bisher aufgrund der postalischen Bestimmungen hauptsächlich mit roten oder rotfluoreszierenden Tinten betrieben. Diese brauchten auch nicht maschinenlesbar sein. Bei fluoreszierenden Tinten wurde lediglich überprüft, ob eine rote Fluoreszenz zwischen 580 und 640 nm bei einer Anregungswellenlänge von 254 nm festzustellen ist.

Im Zuge der Automatisierung wird nun eine leistungsfähigere Technologie im Bereich der Überprüfung, der Freimachung, Sortierung und Postbeförderung eingesetzt werden. Dazu wird der Einsatz von ein- und/oder zweidimensionalen Barcodes in Frankiermaschinen zur eindeutigen Identifizierung der Frankierung notwendig. Diese können jedoch mit den bisher in Frankiermaschinen eingesetzten Tinten nicht in maschinenlesbarer Form erzeugt werden.

Mit den bisher bekannten Tinten können die für den Tintenstrahldruck geforderten Eigenschaften nicht optimal erreicht werden. Bekannte Tinten haben entweder zu lange Wegschlagzeiten, keine ausreichende Penetrationsfähigkeit, z.B. solche Tinten, die aus US-A 5,106,416 bekannt sind, oder liefern ausgefranste, kontrastarme Ausdrucke, z. B. solche Tinten, die aus US-A 5,630,867 und US-A 5,674,314 bekannt sind. Ein weiteres Beispiel einer bekannten Tinte ist in US-A-5,681,381 sowie US-A-5,674,314 offenbart.

Es war Aufgabe der Erfindung, eine wasserhaltige Tinte mit guter Penetrationsfähigkeit bereitzustellen, mit der auf einem Farb- oder Tintenstrahldrucker ein kontrastreiches Bild mit hoher Auflösung erzeugt werden kann, ohne daß die Zeichen ausgefranst gedruckt werden. Insbesondere war es Aufgabe der Erfindung eine Tinte bereitzustellen, die zum Druck maschinenlesbarer Zeichen und Barcodes mit einem Farb- oder Tintenstrahldrucker geeignet ist und auch für Frankiermaschinen einsetzbar ist.

Diese Aufgabe wird gelöst mit einer wasserhaltigen Tinte, die einen oder mehrere Farbstoffe mindestens einen Alkanol mit einer geraden oder verzweigten $C_3$-$C_8$-Alkylkette und 2 bis 4-Hydroxygruppen, mindestens einen $C_1$-$C_6$-Alkylester einer $\alpha$-Hydroxycarbonsäure der Formel R-C(OH)-COOH, worin R H oder ein gerader oder verzweigter $C_1$-$C_6$-Alkylrest ist und gegebenenfalls weitere Hilfsstoffe enthält, wobei der Rest Wasser ist.

Überraschenderweise wurde festgestellt, daß durch Verwendung einer Kombination aus einem Alkylester einer $\alpha$-Hydroxycarbonsäure und einem Alkanol mit 3 bis 8 C-Atomen und 2 bis 4-Hydroxygruppen als Lösemittelgemisch eine wasserhaltige Tinte formuliert werden kann, die sehr schnell in Papier und Pappe penetriert, kontraststarke Zeichen mit hoher Auflösung liefert, gleichzeitig aber ein starkes Verlaufen der Tinte und ein Ausfransen der gedruckten Zeichen weitgehend verhindert.

Diese Vorteile werden erzielt durch die erfindungsgemäße Kombination der Lösemittelbestandteile. Wie oben angedeutet, ist es bei der Formulierung von wasserhaltigen Tinten einerseits wichtig, daß die Penetrationszeit oder Wegschlagzeit kurz ist und andererseits, daß genug Farbstoff auf der Oberfläche bleibt. Dazu bedarf es einer bestimmten Grenzkonzentration an Penetrationsmittel, um beispielsweise reines Wasser in kürzester Zeit in Papier oder Pappe vollständig eindringen zu lassen. Die wichtigste Rolle spielt dabei die sogenannte Benetzungszeit. Grundsätzlich benetzt ein unpolares Lösemittel die Papieroberfläche besser als ein polares Lösemittel. Da jedoch aus ökologischen und Kostengründen die verwendeten Tinten wasserhaltig sein sollten, können nur wasserlösliche und damit polare Lösemittel eingesetzt werden. Dabei gilt allgemein, daß ein Lösemittel um so besser wasserlöslich ist, je polarer es ist und gleichzeitig um so weniger penetrationsfördernd.

Es wurde nun ein Lösemittelsystem gefunden, mit dem sowohl die Wegschlagzeit als auch die notwendige Kontraststärke im erforderlichen Bereich liegen. Dies ist dadurch zu erkären, ohne an diese Erklärung gebunden zu sein, daß die im Gegensatz zu Wasser größeren Moleküle der verwendeten Lösemittel langsamer in das Papier eindringen, aber eine größere Affinität zu der Papieroberfläche aufweisen. Daher wird die Papieroberfläche schneller benetzt als mit reinem Wasser, ohne daß zu viel des gelösten Farbstoffs in das Papier gesaugt wird.

Das Grundlösungsmittel der erfindungsgemäßen Tinte ist Wasser, das aus Kosten- und Umweltgründen ein sehr bevorzugtes Lösemittel ist. Es bildet daher die Basis der erfindungsgemäßen Tinte.

Die erfindungsgemäße wasserhaltige Tinte enthält weiterhin als wesentliche Inhaltsstoffe einen oder mehrere mehrwertige Alkanole als hochsiedende Lösemittel, einen oder mehrere Alkylester einer $\alpha$-Hydroxycarbonsäure als Penetrationsmittel, einen oder mehrere Farbstoffe und ein Tensid und kann gegebenenfalls noch weitere übliche Hilfsstoffe enthalten, wie ein wasserlösliches Polymer, Puffersubstanzen, Biozide, Stellmittel und andere für Tinten übliche Inhaltsstoffe.

Erfindungsgemäß wird als hochsiedendes Lösemittel ein $C_3$-$C_8$-Alkanol mit 2 bis 4 Hydroxygruppen oder eine Mischung mehrerer Alkanole eingesetzt. Es wurde gefunden, daß die Verwendung eines derartigen Alkanols gegenüber Ethylenglycol, das in bekannten Tinten eingesetzt wird, bei gleich guten Wegschlagzeiten die Kontraststärke erhöht und das Ausfransen der gedruckten Zeichen vermindert. Bevorzugt wird als Alkanol ein $C_3$-$C_6$-Alkanol mit 2 oder 3 Hydroxygruppen verwendet. Ein besonders guter Ausgleich zwischen der Penetrationsgeschwindigkeit und der Grenzkonzentration wurde mit 1,5 Pentandiol, 1,2 Propandiol, 1,2,6-Hexantriol und Glycerin oder einer Mischung davon erzielt. Soweit andere Lösemittel die selben Eigenschaften aufweisen, nämlich den Farbstoff gut lösen oder dispergieren und eine übermäßige Penetration des Farbstoffs und ein Ausfransen der gedruckten Zeichen verhindern, können diese in äquivalenterweise als hoch siedendes Lösemittel eingesetzt werden.

Als Penetrationsmittel wird erfindungsgemäß ein Alkylester einer $\alpha$-Hydroxycarbonsäure oder eine Mischung mehrerer Ester, eingesetzt. Der Alkylesteranteil hat 1 bis 6 Kohlenstoffatome, bevorzugt 1 bis 3 Kohlenstoffatome und kann geradkettig oder verzweigt sein. Die $\alpha$-Hydroxycarbonsäure hat ein Kohlenstoffgerüst mit 2 bis 8 Kohlenstoffatomen, bevorzugt 2 bis 4 Kohlenstoffatomen und ist insbesondere D-, L- oder D,L-Milchsäure oder Glycolsäure. Die Druckeigenschaften werden durch den Einsatz des erfindungsgemäßen Alkylesters der $\alpha$-Hydroxycarbonsäure stark verbessert im Vergleich zu den bisher bekannten Systemen. Dies beruht unter anderem darauf, daß die für den Tintenstrahldruck verwendeten Farbstoffe in der Regel in $\alpha$-Hydroxycarbonsäureestern schlechter löslich sind als in Glykolethern, was zur Folge hat, dass weniger Farbstoff durch die notwendige starke Penetration in das Papier transportiert wird und somit mehr Farbstoff sichtbar an der Papieroberfläche verbleibt, ohne dass es jedoch zu einem Verlaufen oder einem Ausfransen kommt. Diese Unterschiede beruhen vor allem auf der Anordnung, Art und Menge der polaritätsbeeinflussenden Gruppen am Molekül.

Die besten Ergebnisse wurden mit Alkyllactaten erzielt, von denen besonders bevorzugt Ethyllactat verwendet wird. Obwohl Butyllactat ebenfalls sehr vorteilhafte Eigenschaften in bezug auf die Penetrationszeit und die Erzeugung klarer Schriftbilder zeigt, ist es weniger bevorzugt, da sein Geruch unangenehm ist. Besonders bevorzugt werden (S)-(-)-Methyllactat, (S)-(-)-Ethyllactat, (S)-(-)-Propyllactat, (S)-(-)-Isopropyllactat, (S)-(-)-n-Butyllactat, (S)-(-)-Isobuyllactat oder eine Mischung davon verwendet.

Da Ethyllactat in leicht und in großen Mengen verfügbar ist, ist es, auch aus Kostengründen, besonders bevorzugt. Darüberhinaus hat es den Vorteil, daß es biologisch abbaubar ist.

Weiterhin wurde gefunden, daß durch Einsatz von Glycolsäurealkylestern, insbesondere von Glycolsäurebutylester eine hohe Auflösung und ein sehr geringes Ausfransen erreicht wird, wobei allerdings die Penetrationszeit etwas länger ist, als bei den Lactaten. Bevorzugt werden daher Glycolsäurealkylester in solchen Tintensystemen eingesetzt, bei denen es weniger auf eine schnelle Penetrationszeit, dafür aber mehr auf eine hohe Auflösung und ein minimales Faserspriten ankommt.

Die Konzentration des Penetrationsmittels muß größer oder gleich der Grenzkonzentration sein, die für ein ausgewähltes Mittel leicht bestimmt werden kann. Die Konzentration sollte bevorzugt in einem solchen Bereich liegen, daß Wegschlagzeiten für 100 pl ± 50 pl Tinte von höchstens 2 Sekunden auf marktüblichem Briefumschlagpapier und Pappe erzielt werden.

Als weiteren wesentlichen Bestandteil enthält die erfindungsgemäße wasserhaltige Tinte einen Farbstoff, wobei unter Farbstoff auch ein Gemisch verschiedener Farbstoffe verstanden wird, um einen gewünschten Farbton zu erzielen. Der Farbstoff kann ein schwarzer Farbstoff oder ein bunter Farbstoff sein. Der erfindungsgemäß verwendete Farbstoff oder die Kombination von Farbstoffen sollte einen hohen Kontrast im sichtbaren Spektralbereich ergeben, damit die gedruckten Zeichen oder Codes sowohl visuell als auch maschinell gut lesbar sind. Bevorzugt werden schwarze oder farbige Farbstoffe oder Mischungen davon, die in den erfindungsgemäß verwendeten Lösemitteln gut löslich sind und in Wasser löslich und emulgierbar sind, verwendet. Bevorzugt werden schwarze Farbstoffe oder Mischungen, die im Ausdruck schwarz erscheinen oder solche bunten Farben, die gut lesbar sind, verwendet. Als Beispiele können Cyan, Blau, Dunkelrot und Dunkelgrün genannt werden. Insbesondere wird ein Farbstoff verwendet, der aus der Gruppe der basischen, sauren oder substantiven Farbstoffe ausgewählt ist.

Bevorzugt wird ein schwarzer oder bunter Farbstoff verwendet oder eine Farbstoffmischung, die beim Druck eine schwarze oder dunkle bunte Farbe ergibt. Besonders bevorzugte schwarze Farbstoffe, die für die erfindungsgemäße wasserhaltige Tinte eingesetzt werden können, sind Brillantschwarz C. I. Nr. 28440, Chromogenschwarz C. I. Nr. 14645, Direkttiefschwarz E C.I. Nr. 30235, Echtschwarzsalz B C.I. Nr. 37245, Echtschwarzsalz K C.I. Nr. 37190, Sudanschwarz HB C.I. 26150, Naphtolschwarz C.I. Nr. 20470, Bayscript® Schwarz flüssig, C.I. Basic Black 11, C.I. Basic Blue 154, Cartasol® Türkis K-ZL flüssig, Cartasol Türkis K-RL flüssig (C.I. Basic Blue 140), Cartasol Blau K5R flüssig, Cartasol Brilliantscharlach K-4GL flüssig oder eine Kombination dieser Farbstoffe. Der für die erfindungsgemäße Tinte verwendete Farbstoff kann auch ein Pigment sein.

Geeignet sind z.B. die im Handel erhältlichen Farbstoffe Hostafine® Schwarz TS flüssig (vertrieben von Clariant GmbH Deutschland), Bayscript® Schwarz flüssig (C.I.-Gemisch, vertrieben von Bayer AG Deutschland), Cartasol® Schwarz MG flüssig (C.I. Basic Black 11, Eingetragenes Markenzeichen der Clariant GmbH Deutschland), Flexonylschwarz PR 100 (Direkttiefschwarz E C.I. Nr. 30235, vertrieben von Hoechst AG).

Außerdem enthält die erfindungsgemäße wasserhaltige Tinte ein Tensid zur Einstellung der Oberflächenspannung. Das Tensid trägt außerdem auch zur Penetrationssteuerung bei. Es können die üblicherweise für Tinten verwendeten Tenside in Betracht gezogen werden. Da kationische oder anionische Tenside durch ihre geladenen Gruppen die Eigenschaften des Farbstoffes oder des Lösesystems verändern können, wird bevorzugt ein amphoteres oder nichtionisches Tensid eingesetzt. Der Einsatz spezieller anionischer oder kationischer Tenside, die die Eigenschaften der wasserhaltigen Tinte nicht verändern, ist jedoch auch möglich und der Fachmann kann mit einfachen Versuchen derartige geeignete Tenside auffinden. Tenside, die besonders geeignet sind für die Formulierung der erfindungsgemäßen wasserhaltigen Tinte sind amphotere Tenside aus der Gruppe der Betaine, ethoxylierte Diole, z.B. solche aus der Surfynol-Produktreihe der Firma Air-Products Deutschland, oder eine Mischung davon.

Ein besonders bevorzugtes Tensidsystem, mit dem besonders vorteilhafte Ergebnisse erzielt wurden, ist eine Mischung aus N,[N-(N-2-Hydroxyethyl-N-carboxyethylaminoethyl)essigsäureamido]-N,N-dimethyl-N-kokosammoniumbetain, 2,4,7,9-Tetramethyldec-5-in-4,7-diol, das mit 5-30 Mol ethoxyliert ist (z.B. von Airproducts, Deutschland aus der Surfynolreihe erhältlich), und das Natriumsalz von N-β-Hydroxyethyl-N-carboxymethylfettsäureamidoethylamin.

Das Tensid wird in der für Tinten üblichen Menge verwendet. Bevorzugt wird es in einer solchen Menge verwendet, daß die Oberflächenspannung der Tinte in einem Bereich von 15 bis 60, bevorzugt 25 bis 45 mN/m, gemessen bei 25°C, liegt.

Eine wichtige Eigenschaft der Tinte ist ihre Viskosität, die weder zu gering sein darf, da ansonsten das Düsensystem zum Sprühen neigt, wodurch die Konturen unscharf werden, noch zu hoch sein darf, da ansonsten die Tinte nicht schnell genug durch die feinen Düsen oder Kapillaren fließen kann. Tinten mit einer kinematischen Viskosität im Bereich von 2 bis 12 mm$^2$/s, bevorzugt 4 bis 9,5 mm$^2$/s, sind für Tintenstrahldrucker gut geeignet. Bevorzugt wird daher die Viskosität der erfindungsgemäßen Tinte in diesem Bereich eingestellt. Dies erfolgt im wesentlichen durch die eingesetzte Menge an Wasser und kann auch über den Zusatz von wasserlöslichen Polymeren erfolgen.

Die erfindungsgemäße wasserhaltige Tinte kann zusätzlich zu den oben erwähnten Bestandteilen noch fakultativ weitere Hilfsstoffe enthalten, die die Eigenschaften der Tinte verbessern oder variieren. Als weitere Hilfsstoffe können insbesondere wasserlösliche Polymere, Puffersubstanzen, Biozide, Stellmittel und andere für Tinten übliche Inhaltsstoffe genannt werden.

So ist üblicherweise in der wasserhaltigen Tinte ein wasserlösliches Polymer enthalten, das den Farbstoff oder ein Pigment auf der Papieroberfläche bindet. Hier kann jedes für Tinten für den Farbstrahldruck geeignete wasserlösliche Polymer, wie es in üblichen Tintenformulierungen enthalten ist, verwendet werden. Bevorzugt wird als wasserlösliches Polymer wasserlösliche Stärke, insbesondere mit einem mittleren Molekulargewicht von 3.000 bis 7.000, Polyvinylpyrrolidon, insbesondere mit einem mittleren Molekulargewicht von 25.000 bis 250.000, Polyvinylalkohol, insbesondere mit einem mittleren Molekulargewicht von 10.000 bis 20.000, Xanthan-Gummi, Carboxy-Methylcellulose, ein Ethylenoxid/Propylenoxid-Block- Copolymer, insbesondere mit einem mittleren Molekulargewicht von 1000 bis 8000, z.B. eines aus der Pluronic®-Produktreihe der Firma BASF AG, Deutschland, oder eine Mischung dieser Polymere verwendet. Das mittlere Molekulargewicht des wasserlöslichen Polymers sollte mindestens 1000 sein und bevorzugt, je nach Art des ausgewählten Polymers, nicht über 1 Million, bevorzugt nicht über 250 000 liegen.

Um eine mikrobielle Kontamination der wasserhaltigen Tinte, die durch den relativ hohen Wassergehalt ein guter Nährboden für Mikroorganismen ist, zu verhindern, kann der Tinte ein biozides Konservierungsmittel zugesetzt werden. Jedes Konservierungsmittel, das für derartige wasserhaltige Systeme bekannt ist und die Eigenschaften der Tinte nicht verändert, ist hier geeignet. Als geeignet hat sich beispielsweise ein unter der Bezeichnung PROXEL®GXL von ICI vertriebenes mikrobizides Konservierungsmittel auf Basis von 1,2-Benzisothiazolin-3-on-Verbindungen, erwiesen. Das biozide Konservierungsmittel wird in den üblicherweise eingesetzten Mengen verwendet, bevorzugt in einem Bereich von 500 bis 3000 ppm, bezogen auf das Gewicht der fertigen Tinte.

Da die Eigenschaften der wasserhaltigen Tinte mit dem pH-Wert variieren können, ist es bevorzugt, daß die Tinte ein Puffersystem enthält, um den pH-Wert im gewünschten Bereich abzupuffern. Der pH-Wert der Tinte kann in einem breiten Bereich von 2,5 bis 8,5 variieren und liegt bevorzugt in einem Bereich von 5 bis 8. Um eine Korrosion der Teile des Druckers, die mit der Tinte in Kontakt kommen, zu vermeiden und das zu bedruckende Material nicht negativ zu beeinflussen, sollte der pH-Wert weder zu sauer, d.h. unter 2, noch zu basisch, d.h. über 10, sein.

Zur Abpufferung des gewünschten Bereichs sind die auf diesem Gebiet üblichen Puffersysteme geeignet, die überlicherweise für wasserhaltige Tinten verwendet werden. Geeignete Puffersysteme dürfen keine Verkrustungen der Düsen durch Kristallbildung verursachen, mit den Inhaltsstoffen der Tinte keine Reaktionen eingehen, insbesondere keine solchen, die den Farbstoff verändern oder zur Verkrustung der Düsen führen, und, im Fall eines Bubble-Jetssystems, keine Verkrustung der Heizdots durch Pyrolyse bilden. Außerdem sollten die Druckeigenschaften, z.B. die Penetrationseigenschaften, der Tinte, durch das Puffersystem nicht wesentlich verändert werden. In einem bevorzugten System trägt das Puffersystem zur Stabilisierung der Tintenformulierung bei. Als Beispiele für Puffersysteme können Lithiumacetat, Boratpuffer, Triethanolamin oder Essigsäure/Natriumacetat genannt werden. Der Puffer wird je nach dem, ob der eingesetzte Farbstoff sauer oder basisch ist, ausgewählt. Besonders gute Ergebnisse wurden im sauren Bereich mit Natriumacetat und Essigsäure und im basischen Bereich mit Triethanolamin erzielt. Das Puffersystem wird bevorzugt in einem Konzentrationsbereich von 0,1 bis 10 Gew.-% eingesetzt.

In einer bevorzugten Ausführungsform hat die erfindungsgemäße wasserhaltige Tinte die folgende Zusammensetzung, die sich als besonders vorteilhaft erwiesen hat: 0,1 bis 6 Gew.-% Farbstoff(e) (bezogen auf Trockenmasse) 15 bis 55% mehrwertige Alkanol(e), 1 bis 25 Gew.-% Alkylester einer $\alpha$-Hydroxycarbonsäure, 0 bis 5 Gew.-% wasserlösliches Polymer, 0 bis 3000 ppm Biozid, 0 bis 10 Gew.-% Puffer und 30 bis 60 Gew.-% Wasser.

Die physikalischen Parameter der erfindungsgemäßen Tinte können in üblicherweise für den jeweils zu verwendenden Drucker in ansich bekannterweise eingestellt werden. Bei Verwendung eines Jet-Mail™-Druckwerkes haben sich die folgenden Parameter als geeignet erwiesen: Kinematische Viskosität bei 32°C 4,0 bis 9,5 mm$^2$/s, Oberflächenspannung 25 bis 45 mN/m, Kontaktwinkel auf Papier kleiner 45° und eine Wegschlagzeit von 100 pl $\pm$ 50 pl Tinte kleiner 2 s auf marktüblichen Briefumschlagpapieren und Pappen.

Die erfindungsgemäße wasserhaltige Tinte hat eine hohe Penetrationsfähigkeit und liefert scharfe, kaum ausgefranste gedruckte Zeichen. Sie eignet sich daher besonders gut zum Druck von maschinenlesbaren Zeichen und Barcodes.

Ein weiterer Gegenstand der vorliegenden Erfindung istdaher die Verwendung einer erfindungsgemäßen wasserhaltigen Tinte für den Druck von maschinenlesbaren Zeichen und Barcodes.

Weiterhin ist Gegenstand der Erfindung die Verwendung der erfindungsgemäßen wasserhaltigen Tinte für digital druckende Frankiermaschinen, insbesondere solche, die mit Tintenstrahldruck-Technologie, z.B. Piezo- und Bubble-Jet-Verfahren, betrieben werden.

Die Erfindung wird durch die folgenden Beispiele und Figuren erläutert, wobei

Fig. 1    ein Diagramm ist, in dem die Penetrationszeiten für verschiedene Penetrationsmittel mit H$_2$O aufgetragen sind,

Fig. 2    ein Diagramm ist, in dem die Penetrationszeiten für Mischungen von Lösemitteln mit verschiedenen Anteilen an Penetrationsmittel aufgezeichnet sind,

Fig. 3 ein Diagramm ist, das die Penetrationszeiten für Pentandiol mit verschiedenen Anteilen an Penetrationsmittel zeigt,

Fig. 4 ein Diagramm ist, das die Penetrationszeiten von Mischungen aus Glycerin mit verschiedenen Penetrationsmitteln zeigt,

Fig. 5 ein Original-Scan zur Beurteilung des Featherings ist und

Fig. 6 zwei Referenzausdrucke zur Beurteilung der Auflösung zeigt.

## Beispiel 1

Es wurden die Penetrationszeiten von 0,5 µl Penetrationsmittel mit Wasser auf Papier und Pappe getestet. Die folgenden Zusammensetzungen wurden verwendet:

| A | (0 % bis 100 % Ethyllactat, Differenz zu 100 % Wasser) | = Ethyllactat und Wasser auf Referenzpapier |
|---|---|---|
| B | (0 % bis 100 % Ethyllactat, Differenz zu 100 % Wasser) | = Ethyllactat und Wasser auf Pappe |
| C | (0 % bis 100 % Diethylenglycolmonobutylether, Differenz zu 100 % Wasser) Vergleich | = Diethylenglycolmonobutylether und Wasser auf Referenzpapier, |
| D | (0 % bis 100 % Diethylenglycolmonobutylether, Differenz zu 100 % Wasser) Vergleich | = Diethylenglycolmonobutylether und Wasser auf Pappe. |

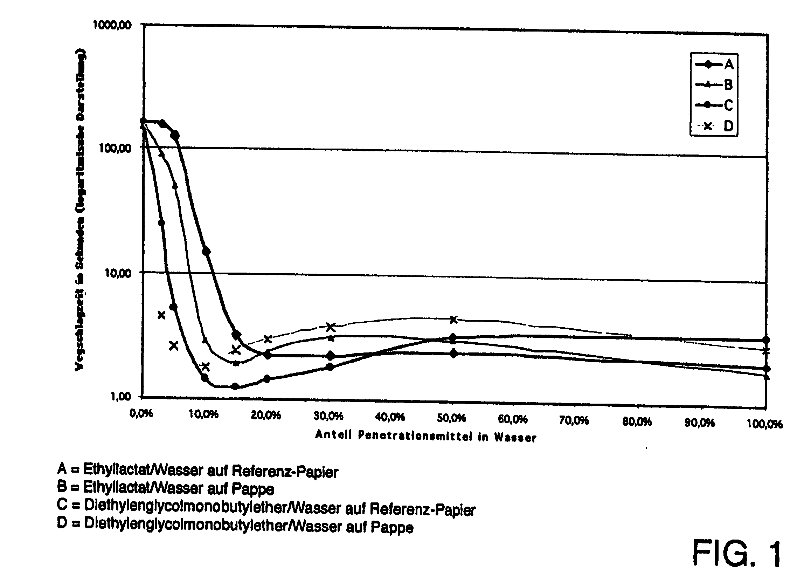

Die Ergebnisse sind dem in Figur 1 gezeigten Diagramm 1 zu entnehmen. Man sieht, daß die Penetrationszeiten für Mischungen von Wasser und dem erfindungsgemäß verwendeten Penetrationsmittel im selben Bereich, wie die der üblichen Penetrationsmittel liegen.

## Beispiel 2

Es wurden die Penetrationszeiten (Wegschlagzeiten) von verschiedenen Mischungen aus Wasser, Penetrationsmittel und hochsiedendem Lösemittel untersucht. Es wurden zwei Lösemittelmischungen mit verschiedenen Anteilen an Penetrationsmittel auf Referenzpapier getestet. Die eingesetzten Mischungen waren wie folgt:

| A | (Vergleich) | = 50 % Diethylenglycol und 1-20 % Diethylenglycol-Monobutylether, Differenz zu 100 % Wasser; |
|---|---|---|
| B | (erfindungsgemäß) | = 50 % 1,5-Pentandiol und 1-20 % Ethyllactat und Differenz zu 100 % Wasser. |

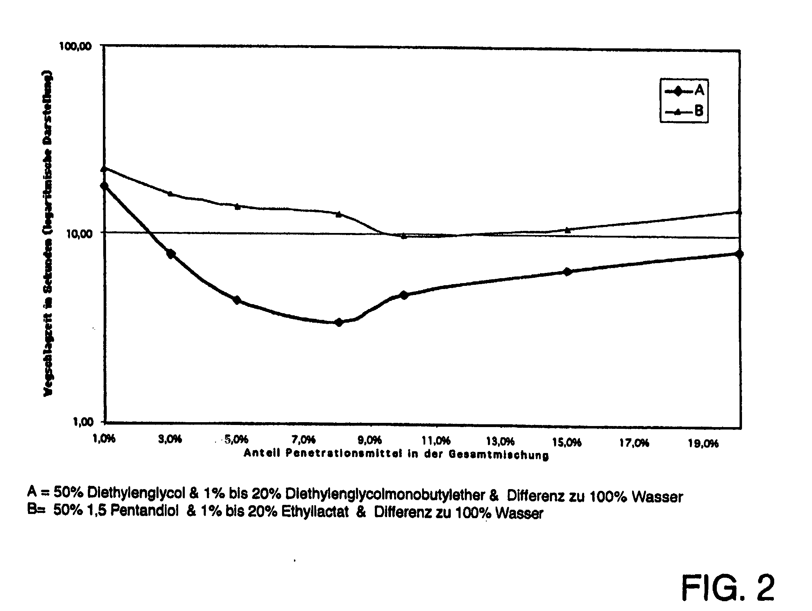

Die Ergebnisse dieser Tests sind in dem in Fig. 2 gezeigten Diagramm 2 aufgetragen. Wie ersichtlich ist, senkt der Zusatz des Hochsieders zwar die Grenzkonzentration, erhöht aber die Penetrationszeiten der Zusammensetzung.

## Beispiel 3

Es wurden die Penetrationszeiten für verschiedene Lactate in unterschiedlichen Anteilen getestet. Als hochsiedendes Lösemittel wurde 1,5-Pentandiol verwendet. Die Proben wurden auf Referenzpapier getestet. Die folgenden Zusammensetzungen wurden verwendet:

A = 50 % 1,5-Pentandiol, 0 bis 20 % Methyllactat, Rest Wasser
B = 50 % 1,5-Pentandiol, 0 bis 20 % Ethyllactat, Rest Wasser
C = 50 % 1,5-Pentandiol, 0 bis 20 % Isopropyllactat, Rest Wasser
D = 50 % 1,5-pentandiol, 0 bis 20 % n-Butyllactat, Rest Wasser.

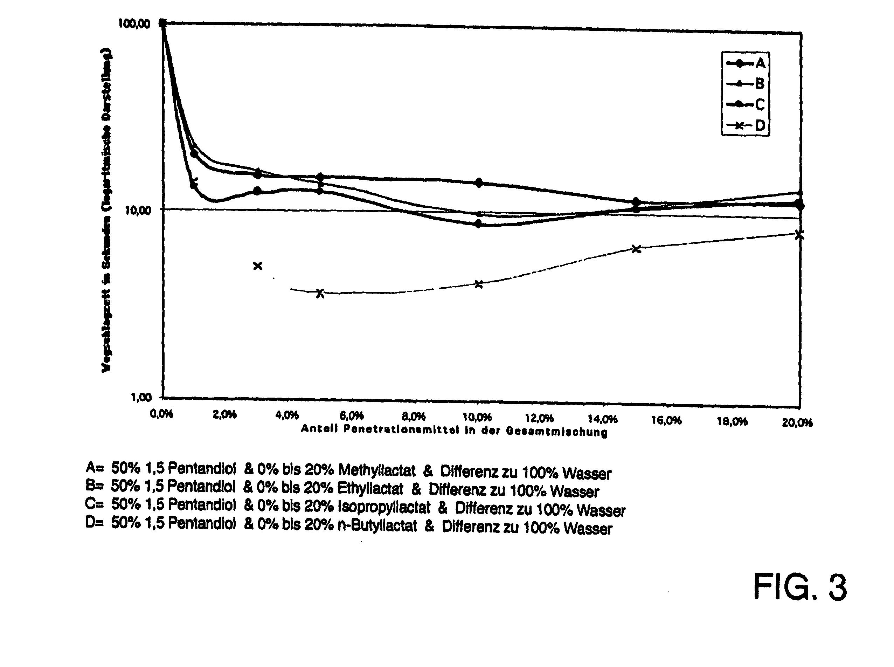

Die Ergebnisse für die Tests sind dem in Fig. 3 gezeigten Diagramm 3 zu entnehmen.

Das Diagramm zeigt, daß alle getesteten Lactate gut als Penetrationsmittel geeignet sind, wobei mit n-Butyllactat die schnellsten Penetrationszeiten erreicht werden. Da jedoch der Geruch des n-Butyllactats unangenehm ist, ist es gegenüber den anderen Lactaten weniger bevorzugt, kann jedoch, wenn der Geruch keine Rolle spielt, ebenso gut eingesetzt werden.

Beispiel 4

Um die Eigenschaften anderer α-Hydroxycarbonsäureester alsPenetrationsmittel zu testen, wurde in diesem Beispiel die Verwendung von Glycolsäurebutylester mit der Verwendung von Ethyllactat verglichen. Dazu wurden die Penetrationszeiten von 0,5 µl der Mischungen aus Glycerin und verschiedenen Anteilen Penetrationsmittel auf Referenzpapier getestet. Die folgenden Zusammensetzungen kamen zum Einsatz:

A = 50 % Glycerin, 0 bis 20 % Diethylenglycolmonobutylether, Rest Wasser
B = 50 % Glycerin, 0 bis 20 % Glycolsäure-butylester, Rest Wasser
C = 50 % Glycerin, 0 bis 20 % Ethyllactat, Rest Wasser

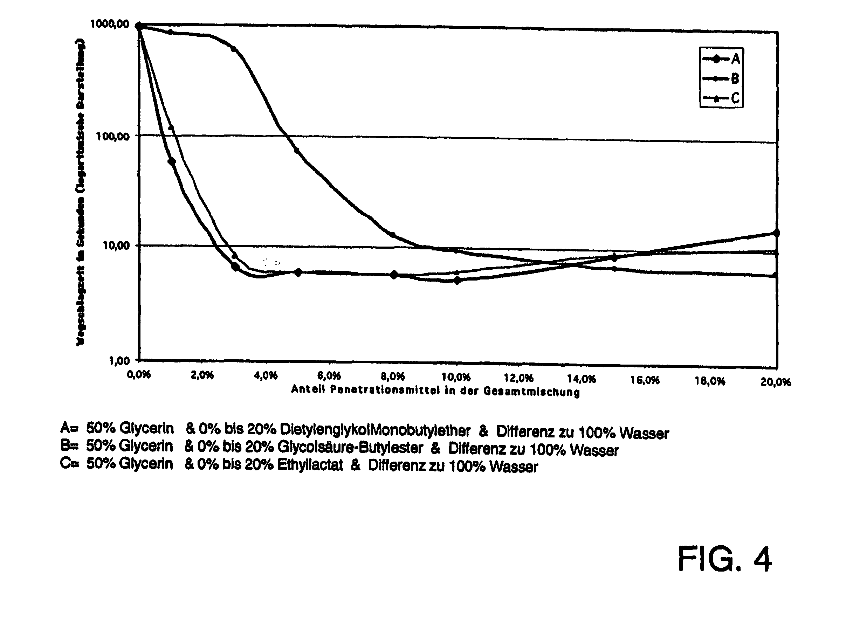

Die Ergebnisse sind in dem in Fig. 4 dargestellten Diagramm 4 gezeigt. Ein Blick auf das Diagramm zeigt, daß auch mit Glycerin als Lösemittel gute Penetrationszeiten erzielt werden können. Wenn allerdings in dem Lösemittelsystem Wasser/Glycerin Glycolsäurebutylester als Penetrationsmittel verwendet wird, muß er in höherer Menge eingesetzt werden, um $t_{min}$ zu erreichen. Vorteilhaft wird der Glycolsäurebutylester daher in solchen Tintensystemen eingesetzt, bei denen weniger eine schnelle Penetrationszeit, als eine hohe Auflösung gefordert wird.

Beispiel 5

Es wurden verschiedene Tinten mit Ethyllactat formuliert und die Druckqualität dieser Tinten bezüglich des Featherings und der Auflösung untersucht. Gleichzeitig wurden Vergleichsrezepturen mit Diethylenglycol-monobutylether formuliert, dem im Stand der Technik verwendeten Penetrationsmittel. Die Rezepturen sind im folgenden angegeben und die erzielten Druckergebnisse sind in der Tabelle 1 aufgeführt:

Rezeptur 1:

| Wasser | 28,9 Gew.% |
|---|---|
| Glycerin (87%) | 18,0 Gew.% |
| 1,2 Propandiol | 32,0 Gew.% |
| Ethyllactat | 11,0 Gew.% |
| Hostafine® Schwarz TS flüssig[1] | 10,0 Gew.% |
| PROXEL®GXL[2] | 00,1 Gew.% |

[1] im Handel erhältlich, hergestellt von Clariant GmbH, Deutschland
[2] im Handel erhältlich, hergestellt von ICI

Der pH-Wert dieser Zusammensetzung war 6,9, gemessen bei 25°C. Die Tinte hatte eine kinematische Viskosität bei 32°C von 6,0 mm$^2$/s. Die Oberflächenspannung betrug bei 25°C 37 mN/m

Rezeptur A (Vergleichsbeispiel):

| Wasser | 30,9 Gew.% |
|---|---|
| Glycerin (87%) | 18,0 Gew.% |
| 1,2-Propandiol | 31,0 Gew.% |
| Diethylenglycol-monobutylether | 10,0 Gew.% |
| Hostafine® Schwarz TS flüssig[1] | 10,0 Gew.% |
| PROXEL®GXL[2] | 00,1 Gew.% |

[1] im Handel erhältlich, hergestellt von Clariant GmbH, Deutschland
[2] im Handel erhältlich, hergestellt von ICI

Der pH - Wert dieser Zusammensetzung, der bei 25°C bestimmt wurde, war 8,0. Die kinematische Viskosität wurde bei 32°C bestimmt als 6,6 mm$^2$/s. Die Oberflächenspannung war bei 25°C 35 mN/m.

Rezeptur 2 (erfindungsgemäß):

| Wasser | 32,5 Gew.% |
|---|---|
| Glycerin (87%) | 20,5 Gew.% |
| 1,5-Pentandiol | 18,5 Gew.% |
| Ethyllactat | 10,0 Gew.% |
| Bayscript®Schwarz flüssig[1] | 13,5 Gew. % |
| Surfynol®485[2] | 00,4 Gew.% |
| Pluronic® RPE 2520[3] | 04,0 Gew.% |
| PROXEL®GXL[4] | 00,1 Gew.% |
| Triethanolamin | 00,5 Gew.% |

[1] im Handel erhältlich, hergestellt von Bayer AG
[2] im Handel erhältlich, hergestellt von Air-Products
[3] im Handel erhältlich, hergestellt von BASF
[4] im Handel erhältlich, hergestellt von ICI

Die kinematische Viskosität der Tinte bei 32°C war 6,7 mm$^2$/s, die Oberflächenspannung bei 25°C war 35 mN/m und der pH - Wert bei 25°C war 7,7.

Rezeptur B (Vergleichsbeispiel)

| Wasser | 27,0 Gew.% |
|---|---|
| Glycerin (87%) | 20,5 Gew.% |
| 1,5-Pentandiol | 18,5 Gew.% |
| Diethylenglycol-monobutylether | 15,0 Gew.% |
| Bayscript®Schwarz flüssig[1] | 14,0 Gew.% |
| Surfynol® 485[2] | 00,4 Gew.% |
| Pluronic® RPE 2520[3] | 04,0 Gew.% |
| PROXEL®GXL[4] | 00,1 Gew.% |
| Triethanolamin | 00,5 Gew.% |

[1] im Handel erhältlich, hergestellt von Bayer AG
[2] im Handel erhältlich, hergestellt von Air-Products
[3] im Handel erhältlich, hergestellt von BASF
[4] im Handel erhältlich, hergestellt von ICI

Die kinematische Viskosität bei 32°C wurde bestimmt als 9,5 mm$^2$/s, der pH-Wert betrug bei 25 °C 8,2 und die Oberflächenspannung bei 25 °C war 35 mN/m.

Rezeptur 3 (erfindungsgemäß)

| Wasser | 31,4 Gew.% |
|---|---|
| Glycerin (87%) | 20,0 Gew.% |
| 1,5-Pentandiol | 21,5 Gew.% |
| Ethyllactat | 10,0 Gew.% |
| Cartasol® Schwarz MG flüssig[1] | 15,0 Gew.% |
| Pluronic® RPE 2520[2] | 02,0 Gew.% |

[1] im Handel erhältlich, hergestellt von Clariant GmbH Deutschland
[2] im Handel erhältlich, hergestellt von BASF

(fortgesetzt)

| | |
|---|---|
| PROXEL®GXL[3] | 00,1 Gew.% |

[3] im Handel erhältlich, hergestellt von ICI

Die kinematische Viskosität bei 32°C war 5,7 mm$^2$/s, die Oberflächenspannung (bei 25°C) war 36 mN/m und der pH-Wert bei 25°C war 5,1.

Rezeptur 4 (erfindungsgemäß)

| | |
|---|---|
| Wasser | 12,7 Gew.-% |
| Glycerin (87%) | 35,0 Gew.-% |
| 1,5-Pentandiol | 13,8 Gew.-% |
| Etyllactat | 15,0 Gew.-% |
| Cartasol®-Türkis K-ZL flüssig* | 12,2 Gew.-% |
| Cartasol®-Brillantscharlach K-4GL flüssig * | 11,1 Gew.-% |
| PROXEL®GXL (ICI) | 00,2 Gew.-% |

*im Handel erhältlich, hergestellt von Clariant GmbH Deutschland

Die kinematische Viskosität bei 32 °C war 6,6 mm$^2$/s, die Oberflächenspannung bei 25°C betrug 39 mN/m. Der pH-Wert, der bei 25°C bestimmt wurde, war 3,5.

Rezeptur C (Vergleichsbeispiel)

| | |
|---|---|
| Wasser | 12,7 Gew.-% |
| Glycerin (87%) | 35,0 Gew.-% |
| 1,5-Pentandiol | 13,8 Gew.-% |
| Diethylenglycolmonobutylether | 15,0 Gew.-% |
| Cartasol®-Türkis K-ZL flüssig* | 12,2 Gew.% |
| Cartasol® -Brilliantscharlach K-4GL flussug* | 11,1 Gew.-% |
| PROXEL®GXL(ICI) | 00,2 Gew.-% |

*im Handel erhältlich, hergestellt von Clariant GmbH Deutschland

Die kinematische Viskosität bei 32°C war 8,2 mm$^2$/s, die Oberflächenspannung bei 25°C betrug 36 mN/m. Der pH-Wert 25°C war 3,5.

Mit diesen Tintenrezepturen wurden Drucktests durchgeführt. Dazu wurden die aufgeführten Bestandteile vermischt und durch einen 0,5μm Einwegfilter filtriert, um eine für den Inkjet-Druck verwendbare Tinte zu erhalten. Mit dieser Tinte wurde dann auf dem Drucksystem der JetMail™-Frankiermaschine der Firma Francotyp-Postafia AG gedruckt und die Ausdrucke bezüglich Feathering, Auflösungsvermögen und Penetrationsfähigkeit untersucht. Die Ergebnisse sind in Tabelle 1 aufgeführt.

Tabelle 1

| Tinte | Wegschlagzeit 0,5μl | Feathering | Auflösung | PCS-Wert (E) Kontrast |
|---|---|---|---|---|
| Rezeptur 1 | 06 s | + | 2 | 0,84 |
| Rezeptur A | 09 s | o | 4 | 0,83 |
| Rezeptur 2 | 08 s | + | 2 | 0,88 |
| Rezeptur B | 12 s | - | 4 | 0,85 |
| Rezeptur 3 | 06 s | + | 2 | 0,85 |
| Rezeptur 4 | 10 s | + | 1 | 0,84 |
| Rezeptur C | 18 s | o | 4 | 0,83 |

Tabelle 1 (fortgesetzt)

| Tinte | Wegschlagzeit 0,5μl | Feathering | Auflösung | PCS-Wert (E) Kontrast |
|---|---|---|---|---|
| FP Post Red 2[1] | 07 s | - | 6 | n.v. |
| HP 51645 A[2] | 61 s | + + | n.v. | n.v. |
| HP 51626 A[2] | 146 s | + + | n.v. | n.v. |

[1] handelsübliche Tinte für den JetMail™-Drucker von Francotyp-Prostalia

[2] handelsübliche Tinte von Hewlett Packard

Der PCS-Wert (Print Contrast Signal) wurde mit dem Gerät Macbeth PCM II mit einem Durchmesser von 0,008 inch (Meßfleck) und Filter E (20nm Band Pass Interference Filter 620-640 nm Laser-Wellenlänge) gemessen. Der Wert ergibt sich wie folgt:

$$PCS = \frac{(Rp-Ri)}{Rp}$$

mit Ri = Reflection Imprint und Rp = Reflection Background

Die Wegschlagzeit wird mit einer 0,5 μl Kapillare bestimmt und kann als Wegschlagzeit wie folgt berechnet werden:

Den korrekten Bezug für die Berechnung der Wegschlagzeit im Drucker liefert die Flächenbelegung, die beim Druck und mit der 0,5 μl Kapillare erreicht wird:

Kapillare:

Fleckdurchmesser = Ø 4 mm; Tintenmenge = 0,5 μl

$$FbK = \frac{500.000 \text{ pl}}{(2 \text{ mm})^2 \cdot \Pi} = \text{ca. } 40.000 \text{ pl/mm}^2$$

Druck:

Fleckdurchmesser (für 100%ige Flächendeckung) bei 192dpi Auflösung = Ø 0,182 mm; Tintenmenge/Tropfen = Ø 100pl

$$FbD = \frac{100\text{pl}}{(0,091 \text{ mm})^2 \cdot \Pi} = \text{ca. } 3.800 \text{ pl/mm}^2$$

Es gilt näherungsweise folgendes Verhältnis:

$$\frac{FbK}{FbD} = \frac{tK[s]}{tD[s]}$$

Demnach folgt dann für eine Wegschlagzeit von 0,5 μl Tinte (tK) im Versuch - eine Wegschlagzeit im Drucker (tD) von:

$$tD = \frac{tK \cdot FbD}{FbK} = \text{Beispielsweise für } tK = 10 \text{ s} \Rightarrow tD = 0,95 \text{ s}$$

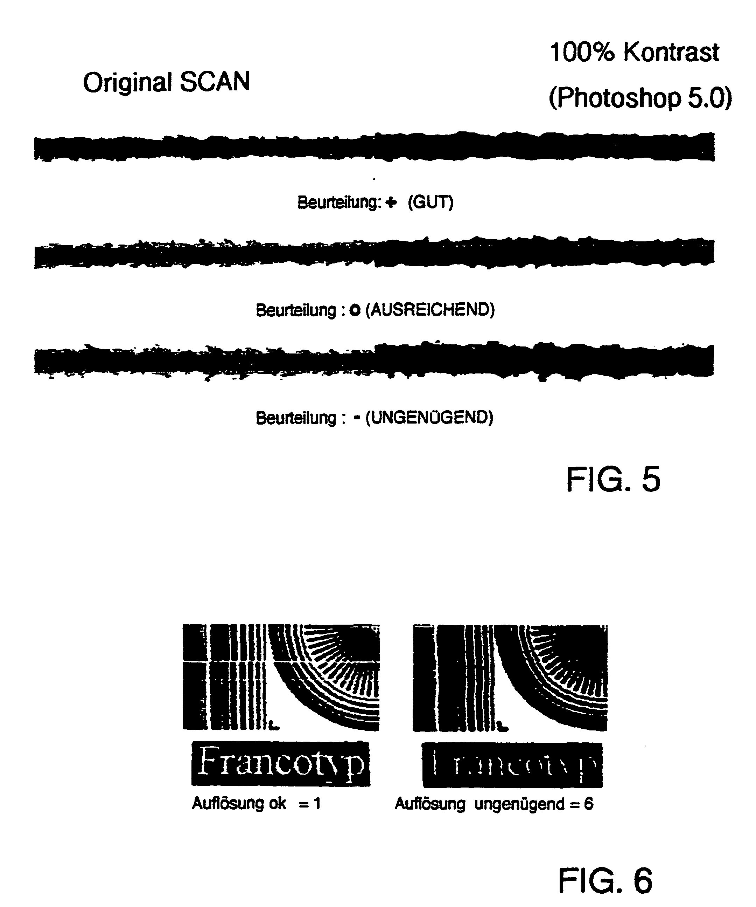

Die Auswertung des Featherings erfolgte auf Basis der Bewertung, wie sie Fig. 5 zu entnehmen (Referenzpapier mit 2400 dpi-Scan bei 8facher Vergrößerung) ist.

Zur Beurteilung der Auflösung erfolgte ein Ausdruck auf einem InkJet-Drucker auf Referenzpapier mit 1200 dpi-Scan und zweifacher Vergrößerung, wobei eine Auflösung, wie sie in Fig. 5a gezeigt ist, als sehr gut beurteilt wurde, während eine Auflösung, wie sie in Fig. 5b gezeigt ist, ungenügend ist, d.h. nicht maschinenlesbar ist.

Wie die Ergebnisse zeigen, liefern die erfindungsgemäßen Tinten vorteilhafte Ergebnisse sowohl im Hinblick auf die Penetrationszeit als auch auf die Auflösung und das Feathering. Die Tinten des Standes der Technik, die zum Vergleich ebenfalls getestet wurden, zeigen entweder eine gute Penetrationszeit, dann jedoch ein starkes Ausfransen, oder eine sehr hohe Penetrationszeit, wenn das Ausfransen gering ist. Erfindungsgemäß werden somit wasserhaltige Tinten bereit gestellt, die eine optimale Kombination aus Penetrationszeit, Auflösung und Ausfransen bieten. Es ist auch möglich, daß die Tinte neben dem Alkylester einen Anteil von bis zu 10%, vorzugsweise 5% Glycolether enthält. Insgesamt kann hierbei das Penetrationsmittel etwa bis zu 10 Gew.-% Penetrationsmittel enthalten.

**Patentansprüche**

1. Wasserhaltige Tinte enthaltend:

   - ein oder mehrere Farbstoffe,

   - mindestens einen Alkanol mit einer geraden oder verzweigten $C_3$-$C_8$-Alkylkette und 2 bis 4 Hydroxygruppen, als Hochsieder,

   - mindestens einen $C_1$-$C_6$-Alkyester einer $\alpha$-Hydroxycarbonsäure der Formel R-C(OH)-COOH, worin R = H oder ein gerader oder verzweigter $C_1$-$C_6$-Alkylrest ist als Penetrationsmittel,

   - ggf. weitere Hilfsstoffe,

   - wobei der Rest Wasser ist.

2. Wasserhaltige Tinte nach Anspruch 1 mit einem Tensid.

3. Wasserhaltige Tinte nach Anspruch 1 oder 2,
   **dadurch gekennzeichnet, daß** die Tinte vorzugsweise bis zu 5% Glycolether aufweist.

4. Wasserhaltige Tinte nach einem der Ansprüche 1 bis 3,
   **dadurch gekennzeichnet, daß** der Alkanol ein $C_3$-$C_6$-Alkanol mit 2 oder 3 Hydroxygruppen ist.

5. Wasserhaltige Tinte nach einem der Ansprüche 1 bis 4,
   **dadurch gekennzeichnet, daß** der Alkanol 1,2-Propandiol, 1,5-Pentandiol, 1,2,6-Hexantriol, Glycerin oder eine Mischung davon ist.

6. Wasserhaltige Tinte nach einem der vorhergehenden Ansprüche,
   **dadurch gekennzeichnet, daß** das Penetrationsmittel ein $C_1$-$C_3$-Alkylester einer $\alpha$-Hydroxycarbonsäure ist.

7. Wasserhaltige Tinte nach einem der vorhergehenden Ansprüche,
   **dadurch gekennzeichnet, daß** das Penetrationsmittel der Alkylester von Glycolsäure, D-, L- oder D,L-Milchsäure ist.

8. Wasserhaltige Tinte nach einem der vorhergehenden Ansprüche,
   **dadurch gekennzeichnet, daß** sie die folgende Zusammensetzung hat: 0,1 bis 6 Gew.-% Farbstoff (bezogen auf Trockenmasse), 5 bis 55% mehrwertigen Alkanol 1 bis 25 Gew.-% Alkylester einer $\alpha$-Hydroxycarbonsäure, 0 bis 5 Gew.-% wasserlösliches Polymer, 0 bis 3000 ppm Biozid, 0 bis 10 Gew.-% Puffer und 30 bis 60 Gew.-% Wasser.

9. Wasserhaltige Tinte nach einem der vorhergehenden Ansprüche,
   **dadurch gekennzeichnet, daß** das Penetrationsmittel (S)-(-)-Methyllactat, (S)-(-)-Ethyllactat, (S)-(-)-Propyllactat, (S)-(-)-Isopropyllactat, (S)-(-)-n-Butyllactat, (S)-(-)-Isobuyllactat, Glycolether oder eine Mischung davon ist.

10. Wasserhaltige Tinte nach einem der vorhergehenden Ansprüche, **dadurch gekennzeichnet, daß** der Farbstoff ein schwarzer Farbstoff oder ein dunkler bunter Farbstoff ist, oder eine Mischung von Farbstoffen umfaßt, die im Ausdruck schwarz oder dunkel erscheinen, der die in organischen Lösemitteln löslich ist, sind.

11. Wasserhaltige Tinte nach einem der vorhergehenden Ansprüche, **dadurch gekennzeichnet, daß** der Farbstoff ausgewählt ist aus der Gruppe basischer, saurer oder substantiver Farbstoffe.

12. Wasserhaltige Tinte nach einem der vorhergehenden Ansprüche, **dadurch gekennzeichnet, daß** der Farbstoff Brillantschwarz C.I. Nr. 28440, Chromogenschwarz C.I. Nr. 14645, Direkttiefschwarz ECI. Nr. 30235, Echtschwarzsalz B C.I. Nr. 37245, Echtschwarzsalz K C.I. Nr. 37190, Sudanschwarz HB C.I. 26150, Naphtolschwarz C.I. Nr. 20470, Bayscriptschwarz flüssig, C.I. Basic Black 11, C.I. Basic Blue 154, Cartasol Türkis K-ZL flüssig, Cartasol Türkis K-RL flüssig (C.I. Basic Blue 140), Cartasol Blau K5R flüssig, Cartasol Brilliantscharlach K-4GL flüssig oder eine Kombination dieser Farbstoffe, oder ein Pigment ist.

13. Wasserhaltige Tinte nach einem der vorhergehenden Ansprüche, **dadurch gekennzeichnet, daß** als Hilfsstoffe wasserlösliche Polymere, Puffersubstanzen, Biozide, Stellmittel und andere für Tinten übliche Inhaltsstoffe enthalten sind.

14. Wasserhaltige Tinte nach einem der vorhergehenden Ansprüche,
**dadurch gekennzeichnet, daß** sie ein wasserlösliches Polymer mit einem mittleren Molekulargewicht von mindestens 1000 enthält.

15. Wasserhaltige Tinte nach Anspruch 12,
**dadurch gekennzeichnet, daß** das wasserlösliche Polymer ausgewählt ist aus: wasserlöslicher Stärke insbesondere mit einem mittleren Molekulargewicht von 3.000 bis 7.000, Polyvinylpyrolidon insbesondere mit einem mittleren Molekulargewicht von 25.000 bis 250.000, Polyvinylalkohol insbesondere mit einem mittleren Molekulargewicht von 10.000 bis 20.000, Xanthangummi, Carboxymethylcellulose, Ethylenoxid/Propylenoxidblockcopolymer mit einem mittleren Molekulargewicht von 1000 bis 8000 oder einer Mischung davon.

16. Wasserhaltige Tinte nach einem der vorhergehenden Ansprüche,
**dadurch gekennzeichnet, daß** sie als Puffer zur chemischen Stabilisierung Triethanolamin oder Natriumacetat und Essigsäure enthält.

17. Wasserhaltige Tinte nach einem der vorhergehenden Ansprüche,
**dadurch gekennzeichnet, daß** sie als Tensid ein amphoteres oder nicht ionisches Tensid oder eine Mischung davon enthält.

18. Verwendung einer wasserhaltigen Tinte nach einem der Ansprüche 1 bis 17 für Farbstrahldruck mit der Piezo-InkJet-Technologie.

19. Verwendung einer wasserhaltigen Tinte nach einem der Ansprüche 1 bis 17 für ein Frankiermaschinensystem.

20. Frankiermaschine mit einer Tinte nach einem der vorhergehenden Ansprüche und einer Druckeinrichtung, welche die Tinte zum Aufdruck auf Poststücken verarbeitet.

21. Postgut, welches mit einer Tinte nach einem der vorhergehenden Ansprüche bedruckt ist.

**Claims**

1. Aqueous ink comprising:

   - one or more dyes,

   - at least one alkanol having a straight or branched $C_3$-$C_8$-alkyl chain and from 2 to 4 hydroxy groups, as high boiler,

   - at least one $C_1$-$C_6$-alkyl ester of an $\alpha$-hydroxycarboxylic acid of the formula R-C(OH)-COOH, wherein R = H or a straight or branched $C_1$-$C_6$-alkyl radical, as penetration agent,

   - optionally further auxiliary substances,

- the remainder being water.

2. Aqueous ink according to claim 1 comprising a surfactant.

3. Aqueous ink according to claim 1 or 2, **characterised in that** the ink preferably comprises up to 5 % glycol ether.

4. Aqueous ink according to any one of claims 1 to 3, **characterised in that** the alkanol is a $C_3$-$C_6$-alkanol having 2 or 3 hydroxy groups.

5. Aqueous ink according to any one of claims 1 to 4, **characterised in that** the alkanol is 1,2-propane-diol, 1,5-pentanediol, 1,2,6-hexanetriol, glycerol or a mixture thereof.

6. Aqueous ink according to any one of the preceding claims, **characterised in that** the penetration agent is a $C_1$-$C_3$-alkyl ester of an $\alpha$-hydroxycarboxylic acid.

7. Aqueous ink according to any one of the preceding claims, **characterised in that** the penetration agent is the alkyl ester of glycolic acid, D-, L- or D,L-lactic acid.

8. Aqueous ink according to any one of the preceding claims, **characterised in that** it has the following composition: from 0.1 to 6 wt.% dye (based on dry composition), from 5 to 55 wt.% polyhydric alkanol, from 1 to 25 wt.% alkyl ester of an $\alpha$-hydroxycarboxylic acid, from 0 to 5 wt.% water-soluble polymer, from 0 to 3000 ppm biocide, from 0 to 10 wt.% buffer and from 30 to 60 wt.% water.

9. Aqueous ink according to any one of the preceding claims, **characterised in that** the penetration agent is (S)-(-)-methyl lactate, (S)-(-)-ethyl lactate, (S)-(-)-propyl lactate, (S)-(-)-isopropyl lactate, (S)-(-)-n-butyl lactate, (S)-(-)-isobutyl lactate, glycol ether or a mixture thereof.

10. Aqueous ink according to any one of the preceding claims, **characterised in that** the dye is a black dye or a dark coloured dye or comprises a mixture of dyes that appear black or dark when printed, which dye/dyes is/are soluble in organic solvents.

11. Aqueous ink according to any one of the preceding claims, **characterised in that** the dye is selected from the group of basic, acidic or substantive dyes.

12. Aqueous ink according to any one of the preceding claims, **characterised in that** the dye is brilliant black C.I. No. 28440, chromogen black C.I. No. 14645, direct deep black ECl. No. 30235, fast black B salt C.I. No. 37245, fast black K salt C.I. No. 37190, Sudan black HB C.I. 26150, naphthol black C.I. No. 20470, Bayscript black liquid, C. I. Basic Black 11, C.I. Basic Blue 154, Cartasol turquoise K-ZL liquid, Cartasol turquoise K-RL liquid (C.I. Basic Blue 140), Cartasol blue K5R liquid, Cartasol brilliant scarlet K-4GL liquid or a combination of these dyes, or is a pigment.

13. Aqueous ink according to any one of the preceding claims, **characterised in that** water-soluble polymers, buffer substances, biocides, extenders and other ingredients conventional in inks are present as auxiliary substances.

14. Aqueous ink according to any one of the preceding claims, **characterised in that** it comprises a water-soluble polymer having an average molecular weight of at least 1000.

15. Aqueous ink according to claim 12, **characterised in that** the water-soluble polymer is selected from: water-soluble starch, especially having an average molecular weight of from 3000 to 7000, polyvinylpyrrolidone, especially having an average molecular weight of from 25,000 to 250,000, polyvinyl alcohol, especially having an average molecular weight of from 10,000 to 20,000, xanthan gum, carboxymethyl cellulose, ethylene oxide/propylene oxide block copolymer having an average molecular weight of from 1000 to 8000, or a mixture thereof.

16. Aqueous ink according to any one of the preceding claims, **characterised in that** it comprises triethanolamine or sodium acetate and acetic acid as buffer for chemical stabilisation.

17. Aqueous ink according to any one of the preceding claims, **characterised in that** it comprises an amphoteric or non-ionic surfactant or a mixture thereof as surfactant.

**18.** Use of an aqueous ink according to any one of claims 1 to 17 for inkjet printing using piezo inkjet technology.

**19.** Use of an aqueous ink according to any one of claims 1 to 17 for a franking machine system.

**20.** Franking machine having an ink according to any one of the preceding claims and a printing device which processes the ink for printing on items of mail.

**21.** Mail which has been printed with an ink according to any one of the preceding claims.

**Revendications**

**1.** Encre aqueuse qui contient :

un ou plusieurs colorants,
au moins un alcanol ayant une chaîne alkyle droite ou ramifiée, en $C_3$ à $C_8$, et 2 à 4 groupes hydroxyle, en tant que constituant à point d'ébullition élevé,
au moins un ester d'alkyle en $C_1$ à $C_6$ d'un acide $\alpha$-hydroxycarboxylique de formule R-CH(OH)-COOH dans laquelle R représente un atome d'hydrogène ou un groupe alkyle en $C_1$ à $C_6$, à chaîne droite ou ramifiée, en tant qu'agent de pénétration, et éventuellement d'autres produits auxiliaires,
le restant étant constitué d'eau.

**2.** Encre aqueuse selon la revendication 1, qui contient un tensioactif.

**3.** Encre aqueuse selon la revendication 1 ou 2, **caractérisée en ce qu'**elle contient de préférence jusqu'à 5 % d'un éther de glycol.

**4.** Encre aqueuse selon l'une quelconque des revendications 1 à 3, **caractérisée en ce que** l'alcanol est un alcanol en $C_3$ à $C_6$, ayant 2 ou 3 groupes hydroxyle.

**5.** Encre aqueuse selon l'une quelconque des revendications 1 à 4, **caractérisée en ce que** l'alcanol est le propanediol-1,2, le pentanediol-1,5, l'hexanetriol-1,2,6, le glycérol ou un mélange de ces produits.

**6.** Encre aqueuse selon l'une quelconque des revendications précédentes, **caractérisée en ce que** l'agent de pénétration est un ester d'alkyle en $C_1$ à $C_3$ d'un acide $\alpha$-hydroxycarboxylique.

**7.** Encre aqueuse selon l'une quelconque des revendications précédentes, **caractérisée en ce que** l'agent de pénétration est un ester alkylique de l'acide glycolique, de l'acide D-lactique, de l'acide L-lactique ou de l'acide D,L-lactique.

**8.** Encre aqueuse selon l'une quelconque des revendications précédentes, **caractérisée en ce qu'**elle a la composition suivante : 0,1 à 6 % en poids de colorant (pourcentage rapporté au produit sec), 5 à 55 % d'alcanol polyhydroxylé, 1 à 25 % en poids d'ester alkylique d'un acide $\alpha$-hydroxycarboxylique, 0 à 5 % en poids de polymère soluble dans l'eau, 0 à 3 000 ppm d'un biocide, 0 à 10 % en poids d'un tampon et 30 à 60 % en poids d'eau.

**9.** Encre aqueuse selon l'une quelconque des revendications précédentes, **caractérisée en ce que** l'agent de pénétration est le (S)-(-)-lactate de méthyle, le (S)-(-)-lactate d'éthyle, le (S)-(-)-lactate de propyle, le (S)-(-)-lactate d'isopropyle, le (S)-(-)-lactate de n-butyle, le (S)-(-)-lactate d'isobutyle, un éther de glycol ou un mélange de ces produits.

**10.** Encre aqueuse selon l'une quelconque des revendications précédentes, **caractérisée en ce que** le colorant est un colorant noir ou un colorant bigarré foncé, ou comprend un mélange de colorants qui paraissent noir ou foncé à l'impression, ledit colorant ou lesdits colorants étant solubles dans des solvants organiques.

**11.** Encre aqueuse selon l'une quelconque des revendications précédentes, **caractérisée en ce que** le colorant est un colorant choisi parmi le groupe des colorants basiques, des colorants acides et des colorants substantifs.

**12.** Encre aqueuse selon l'une quelconque des revendications précédentes, **caractérisée en ce que** le colorant est le noir brillant C.I. n° 28440, le noir chromogène C.I. n° 14645, le noir profond direct ECI. n° 30235, le noir solide sel B C.I. n° 37245, le noir solide sel K C.I. n° 37190, le noir Soudan HB C.I. n° 26150, le noir de naphtol C.I. n° 20470, le noir Bayscript® liquide, le noir basique C.I. 11, le bleu basique C.I. 154, le turquoise Cartasol® K-ZL liquide, le turquoise Cartasol® K-RL liquide (bleu basique C.I. 140), le bleu Cartasol® K5R liquide, l'écarlate brillant Cartasol® K-4GL liquide ou une combinaison de ces colorants, ou un pigment.

13. Encre aqueuse selon l'une quelconque des revendications précédentes, **caractérisée en ce qu'**elle contient comme produits auxiliaires, des polymères solubles dans l'eau, des substances-tampons, des biocides, des agents de réglage et d'autres ingrédients habituels pour des encres.

14. Encre aqueuse selon l'une quelconque des revendications précédentes, **caractérisée en ce qu'**elle contient un polymère soluble dans l'eau, ayant une masse moléculaire moyenne d'au moins 1000.

15. Encre aqueuse selon la revendication 14, **caractérisée en ce que** le polymère soluble dans l'eau est un polymère choisi parmi les amidons solubles dans l'eau, en particulier ceux ayant une masse moléculaire moyenne de 3000 à 7000, les polyvinylpyrrolidones, en particulier celles ayant une masse moléculaire moyenne de 25 000 à 250 000, les alcools polyvinyliques, en particulier ceux ayant une masse moléculaire moyenne de 10 000 à 20 000, la gomme de xanthane, la carboxyméthylcellulose, les copolymères séquencés d'oxyde d'éthylène et d'oxyde de propylène, ayant une masse moléculaire moyenne de 1000 à 8000, et les mélanges de ces produits.

16. Encre aqueuse selon l'une quelconque des revendications précédentes, **caractérisée en ce qu'**elle contient comme tampon pour la stabilisation chimique, de la triéthanolamine ou de l'acétate de sodium et de l'acide acétique.

17. Encre aqueuse selon l'une quelconque des revendications précédentes, **caractérisée en ce qu'**elle contient comme tensioactif, un tensioactif amphotère ou non-ionique, ou un mélange de tels tensioactifs.

18. Utilisation d'une encre aqueuse selon l'une quelconque des revendications 1 à 17, pour l'impression à jet de couleur par la technologie piézo-jet d'encre.

19. Utilisation d'une encre aqueuse selon l'une quelconque des revendications 1 à 17, pour une machine à affranchir.

20. Machine à affranchir munie d'une encre selon l'une quelconque des revendications 1 à 17, et d'un dispositif d'impression qui met en oeuvre cette encre pour l'impression d'étiquettes postales.

21. Objet postal qui est imprimé avec une encre selon l'une quelconque des revendications 1 à 17.

FIG. 1

A = Ethyllactat/Wasser auf Referenz-Papier
B = Ethyllactat/Wasser auf Pappe
C = Diethylenglycolmonobutylether/Wasser auf Referenz-Papier
D = Diethylenglycolmonobutylether/Wasser auf Pappe

FIG. 2

A = 50% Diethylenglycol & 1% bis 20% Diethylenglycolmonobutylether & Differenz zu 100% Wasser
B= 50% 1,5 Pentandiol & 1% bis 20% Ethyllactat & Differenz zu 100% Wasser

A= 50% 1,5 Pentandiol & 0% bis 20% Methyllactat & Differenz zu 100% Wasser
B= 50% 1,5 Pentandiol & 0% bis 20% Ethyllactat & Differenz zu 100% Wasser
C= 50% 1,5 Pentandiol & 0% bis 20% Isopropyllactat & Differenz zu 100% Wasser
D= 50% 1,5 Pentandiol & 0% bis 20% n-Butyllactat & Differenz zu 100% Wasser

FIG. 3

EP 1 072 653 B1

A= 50% Glycerin & 0% bis 20% DietylenglykolMonobutylether & Differenz zu 100% Wasser
B= 50% Glycerin & 0% bis 20% Glycolsäure-Butylester & Differenz zu 100% Wasser
C= 50% Glycerin & 0% bis 20% Ethyllactat & Differenz zu 100% Wasser

FIG. 4

Original SCAN

100% Kontrast

(Photoshop 5.0)

Beurteilung: + (GUT)

Beurteilung : O (AUSREICHEND)

Beurteilung : - (UNGENÜGEND)

FIG. 5

Auflösung ok = 1        Auflösung ungenügend = 6

FIG. 6